# EUROPÄISCHE PATENTANMELDUNG

(11) **EP 3 907 574 A1**
(43) Veröffentlichungstag der Anmeldung: **10.11.2021**
(21) Anmeldenummer: 20173689.9
(22) Anmeldetag: 08.05.2020
(51) Int. Cl.: G05B 19/418, G05B 23/02

(54) **VERFAHREN ZUR GENERIERUNG VON EINER ERKLÄRUNG ZU EINER VORGENOMMENEN ENTSCHEIDUNG EINES FERTIGUNGSSTEUERUNGSSYSTEMS**

(71) Anmelder: Siemens Aktiengesellschaft, 80333 München (DE)
(72) Erfinder: PESCHKE, Dipl.-Ing. Jörn, 90489 Nürnberg (DE); BAKAKEU NGASSAM, Romuald Jupiter, 91054 Erlangen (DE); BÄR, Schirin, 90461 Nürnberg (DE); ELSTERER, Stefan, 90451 Nürnberg (DE); KLOS, Hans-Henning, 91249 Weigendorf (DE)
(74) Vertreter: Siemens Patent Attorneys

(57) **Zusammenfassung**

Die vorliegende Erfindung offenbart ein Verfahren zur steuerungsrelevanten Aufbereitung von Entscheidungen eines Fertigungssteuerungssystem einer dynamischen Produktionsanlage, umfassend die Schritte:
a) Erkennen und Extrahieren von einer Situation der Produktionsanlage, in der eine steuerungsrelevante Entscheidung automatisiert durch das Fertigungssteuerungssystem vorgenommen worden ist;
b) Analysieren und Bewerten dieser Entscheidung im Bezug auf vorgebbare Produktionskriterien mit dem Ziel eine gegebenenfalls suboptimale Entscheidung zu identifizieren;
c) Aufbereiten einer Momentaufnahme des Anlagenzustands der Fertigungsanlage, die für die suboptimale Entscheidung repräsentativ ist, sowie semantisches Anreichern dieser Momentaufnahme durch semantische Informationen zu diesem Anlagezustand, die vorzugsweise direkt auf dem Fertigungssteuerungssystem stammen;
d) Filtern der semantischen Informationen nach erlernbaren Kriterien zur Eliminierung von Informationsbestandteilen, die nicht hinreichend relevant mit einer Beschreibung der vorgefundenen Situation korrelieren, zur Bereitstellung einer gefilterten Zustandsdarstellung;
e) Überprüfen, inwieweit sich die gefilterte Zustandsdarstellung mit vorbestimmten Aussagen zum Verhalten von Ressourcen der Produktionsanlage und/oder zu Strukturinformationen zu den Ressourcen in Zusammenhang setzen lässt, wobei diese Zusammenhänge in Form von vordefinierten Inferenzketten gefunden werden; und
f) Ableiten von semantischen Inhalten aus den aufgefundenen Inferenzketten und Generierung der steuerungsrelevanten Aufbereitung in Form eines in eine Zielsprache transformierten Erklärungstextes, der mittels eines vortrainierten neuronalen Netzes aus der Quintessenz aus den von den Inferenzketten abgeleiteten semantischen Inhalten gewonnen wird.

## Beschreibung

Die vorliegende Erfindung bezieht sich auf ein Verfahren zur steuerungsrelevanten Aufbereitung von Entscheidungen eines Fertigungssteuerungssystem einer dynamischen Produktionsanlage.

Moderne Produktionsanlagen, und zum Teil bereits komplexe und räumlich verteilte Produktionsanlagen, werden heutzutage von Fertigungssteuerungssystemen, sogenannten MES-Systemen (Manufacturing Execution Systems), gesteuert und kontrolliert. Dabei erlauben es diese Fertigungssteuerungssysteme beispielsweise eine Produktionsanlage zu modellieren und die Fertigungsprozesse gemäss der modellierten Produktionsanlage für die Ausführung der Produktionsoperationen zu planen. Einmal geplant können die Produktionsoperationen dann zur Fertigung des gewünschten Produkts abgearbeitet und vollendet werden. Die Steuerung dieser Abarbeitung übernimmt ebenfalls das MES, wobei das MES auch das Datenmanagement während des gesamten Fertigungsprozesses zu Track and Tracing-Zwecken ausführt.

In flexiblen Produktionssystemen gibt es alternative Aktionen (z.B. Bearbeitungsschritte), d.h. es können z.B. bestimmte Aktionen von verschiedenen Ressourcen (Maschinen) durchgeführt werden. Hierbei können Unterschiede z.B. bezüglich Dauer und Qualität der jeweiligen Aktionen bestehen. Die Freiheitsgrade dieser Flexibilität werden durch vorausberechnete Ausführungs-Graphen vorgegeben (Execution Graphs). In diesen sind alle Möglichkeiten bezüglich der Reihenfolgen und Auswahl von alternativen Aktionen (z.B. für einen Fertigungsauftrags) abgebildet.

In einem solchen flexiblen Produktionssystem, dessen Produktionssteuerung mit Hilfe von Ausführungs-Graphen (Execution Graphen) realisiert wird, ist das Systemverhalten für den Anlagenbetreiber oft schwer nachvollziehbar.

Es ist zwar nachvollziehbar, dass eine bestimmte Entscheidung, z.B. vom MES, getroffen wurde, allerdings ist der Grund dafür oft nicht ersichtlich. Es ist z.B. nicht nachvollziehbar, ob ein unerwartetes Systemverhalten (Abweichung vom Normalfall) aufgrund eines Fehlers oder einer globalen Optimierung auftritt. Ein Fehler kann beispielsweise ein Maschinenausfall sein. Bei einer globalen Optimierung kann es vorkommen, dass ein High-Prio-Auftrag bevorzugt und damit ein anderer Auftrag verdrängt wird. Da es sich bei komplexen Fertigungsanlage zeitweise für einen Operator um ein in erheblicher Weise dynamisches System handelt, ist oft im Nachhinein der Zustand des Produktionssystems, an dem beispielsweise von einem MES nicht unbedingt eine optimale Fertigungsoption gewählt worden ist, oft nicht mehr nachvollziehbar.

Flexible Fertigungssysteme mit echter dynamischer Umkonfiguration der Ressourcen wie vorstehend beschrieben und zum Teil auch als wandelbare Fertigungssysteme bezeichnet, kommen in der realen Anwendung zunehmend zum Einsatz. Aus diesem Grund sind Engineering- und Monitoringsysteme, die auf die speziellen Charakteristika, insbesondere die sich dynamisch ändernden Auftragsallokation und Konfiguration angepasst sind, nicht als Produkte oder allgemeine Lösungen verfügbar, sondern werden nur bis zu einem bestimmten Reifegrad individuell auf eine Anlage bezogen bereitgestellt.

Dies führt dazu, das herkömmliche Rückmeldungen aus der Fertigungsanlage (z.B. aus dem MES und/oder statisch konfigurierte Fehlermeldungen aus Anlagenressourcen) unpräzise sind oder oft nicht das eigentliche Problem beschreiben. Da es nicht möglich ist, wie in klassischen Systemen eine statische Relation zwischen Fehlerbild und Ursache auszuprogrammieren (z.B. im SCADA der Siemens AG) können allgemeine Meldungen oder Fehlerfälle der Anlage, inkl. Störungen, Kommunikationsfehler, Ausfälle, Verfügbarkeiten usw., nicht in direkte Relation zu Entscheidungen des MES gesetzt werden. Dies bedeutet, dass das Systemverhalten insbesondere bei Abweichungen und Fehlern trotz dieser Hilfestellung für den Anwender nur schwer nachzuvollziehen sein kann.

In heutigen Systemen sind zwar die gängigen erwarteten Fehlerfälle bereits vorgedacht und über fest einprogrammierte Alarm-Messages realisiert.

Bei dynamischen Systemen hängt es dagegen vom Expertenwissen des Anlagenbetreibers, Wartungspersonal und der Verfügbarkeit von Engineeringinformationen aus unterschiedlichen Quellen ab, ob diese z.T. unstrukturierten und unkorrelierten Daten eine sinnvolle Analyse ermöglichen.

Eine Anwendung von Konzepten wie RCA (Root-Cause Analysis) kann diese Probleme verringern, erfordert aber im Falle wandelbarer Systeme einen massiven Modellierungs- und Engineeringaufwand, da alle möglichen Konstellationen in den Modellen vorgedacht (oder dynamisch aktualisiert) werden müssen.

Daher liegt der vorliegenden Erfindung die Aufgabe zugrunde, ein Verfahren zur steuerungsrelevanten Aufbereitung von Entscheidungen eines Fertigungssteuerungssystem einer dynamischen Produktionsanlage anzugeben, bei dem es wünschenswert wäre, dass natürlichsprachliche Rückmeldungen zur Situation in der Produktionsanlage gegeben werden können, wenn eine Steuerungsentscheidung für den weiteren Produktionsablauf von dem Produktionssteuerungssystem angegeben werden können.

Diese Aufgabe wird erfindungsgemäss durch ein Verfahren zur steuerungsrelevanten Aufbereitung von Entscheidungen eines Fertigungssteuerungssystem einer dynamischen Produktionsanlage gelöst, welches die folgenden Schritte umfasst:
a) Erkennen und Extrahieren von einer Situation der Produktionsanlage, in der eine steuerungsrelevante Entscheidung automatisiert durch das Fertigungssteuerungssystem vorgenommen worden ist;
b) Analysieren und Bewerten dieser Entscheidung im Bezug auf vorgebbare Produktionskriterien mit dem Ziel eine gegebenenfalls suboptimale Entscheidung zu identifizieren;
c) Aufbereiten einer Momentaufnahme des Anlagenzustands der Fertigungsanlage, die für die suboptimale Entscheidung repräsentativ ist, sowie semantisches Anreichern dieser Momentaufnahme durch semantische Informationen zu diesem Anlagezustand, die vorzugsweise direkt auf dem Fertigungssteuerungssystem stammen;
d) Filtern der semantischen Informationen nach erlernbaren Kriterien zur Eliminierung von Informationsbestandteilen, die nicht hinreichend relevant mit einer Beschreibung der vorgefundenen Situation korrelieren, zur Bereitstellung einer gefilterten Zustandsdarstellung;
e) Überprüfen, inwieweit sich die gefilterte Zustandsdarstellung mit vorbestimmten Aussagen zum Verhalten von Ressourcen der Produktionsanlage und/oder zu Strukturinformationen zu den Ressourcen in Zusammenhang setzen lässt, wobei diese Zusammenhänge in Form von vordefinierten Inferenzketten gefunden werden; und
f) Ableiten von semantischen Inhalten aus den aufgefundenen Inferenzketten und Generierung der steuerungsrelevanten Aufbereitung in Form eines in eine Zielsprache transformierten Erklärungstextes, der mittels eines vortrainierten neuronalen Netzes aus der Quintessenz aus den von den Inferenzketten abgeleiteten semantischen Inhalten gewonnen wird.

Auf diese Weise führt das Verfahren eine Aufbereitung der durch das Fertigungssteuerungssystem - nachfolgend nun nur noch als MES bezeichnet - vorgenommen Entscheidungen in einer Weise herbei, dass nach dem Durchlauf des mehrstufigen Verfahrens eine natürlichsprachliche Rückmeldung zur Situation in der Produktionsanlage gegeben werden kann. Dabei werden Korrelationen auf ihre Relevanz geprüft und ggf. mit allgemeinen kausalen Zusammenhängen verknüpft. Aus diesem Grund ist dazu auch kein von der augenblicklichen Anlagenkonfiguration abhängiges Engineering von Fehlermeldungen und/oder sonstigen vom MES bereitgestellten Informationen erforderlich.

In einer vorteilhaften Ausgestaltung der vorliegenden Erfindung kann es vorgesehen sein, dass der Erklärungstext nach vorgebbaren Kriterien sortiert werden kann. Auf diese Weise. Hier vorstellbar sind Kriterien wie beispielsweise die Einfachheit einer Erklärung, eine Hitrate, Anzahl von Likes oder Dislikes von Benutzer und dergleichen. Anhand dieser Kriterien kann dann entschieden werden, was ggfs. von den Erklärungen angezeigt oder eben auch weggelassen werden kann.

Hierbei kann in vorteilhafter Weiterbildung der Erfindung auch ein Lernverfahren helfen, über Ähnlichkeiten auch neue Situationen und deren Erklärungstexte zu sortieren.

Bevorzugte Ausführungsbeispiele der vorliegenden Erfindung werden nachfolgend mit Bezug auf die anhängenden Zeichnungen erläutert. Diese Zeichnungen zeigen in:
- Figur 1: in schematischer Darstellung die wesentlichen Verfahrensschritte eines Verfahrens zur steuerungsrelevanten Aufbereitung von Entscheidungen eines Fertigungssteuerungssystem einer dynamischen Produktionsanlage;
- Figur 2: schematisch den Kontext von Situationen in einem Execution Graph für einen Fertigungsablauf;
- Figur 3: schematisch die Wirkungsweise eines Decision Graphs;
- Figur 4: schematisch ein Informationsmodel und dessen Einsatz zur Bildung eines Snapshots der Anlage bzw. auch nur einer seiner Ressourcen;
- Figur 5: schematisch eine Gesamtübersicht des hier vorliegenden integrierten Informationsmodels;
- Figur 6: schematisch die Situation bei Erkennung einer MES-Entscheidungssituation;
- Figur 7: schematisch den Ablauf der Relevanz-Analyse durch das binäre Filtern des Inputs durch den RL Agenten;
- Figur 8: schematisch den Ablauf der Relevanz-Analyse durch Auswahl von Informationen aus dem Input Vektor durch den RL Agenten;
- Figur 9: schematisch den Vorgang der Bewertung der Informationen bzw. Aussagen aus dem Relevanzlearing unter Einbeziehung allgemeiner Zusammenhänge und Strukturinformationen der Anlage;
- Figur 10: schematisch das Prinzip der Erzeugung natürlichsprachlicher Aussagen;

Nachfolgend werden ein System und ein Verfahren zur steuerungsrelevanten Aufbereitung von Entscheidungen eines Fertigungssteuerungssystem einer dynamischen Produktionsanlage beschrieben. Das System und das Verfahren beruhen darauf, dass nach Durchlauf eines mehrstufigen Verfahrens eine natürlichsprachliche Rückmeldung zur Situation in der Produktionsanlage - nachfolgend kurz als Anlage bezeichnet - gegeben werden kann. Dabei werden Korrelationen auf ihre Relevanz geprüft und ggf. mit allgemeinen kausalen Zusammenhängen verknüpft. Dazu ist kein von der augenblicklichen Anlagenkonfiguration abhängiges Engineering der Fehlermeldungen erforderlich.

Das Verfahren lässt sich in einer zusammenfassenden Darstellung in die folgenden Schritte unterteilen.

### 1. Situationserkennung

In diesem Schritt werden auf Basis des ständigen Monitorings der Anlage durch das MES und ggfs. auch ERP (Enterprise Resource Planning System) Situationen, in denen Entscheidungen für den weiteren Fortgang des Anlagenbetriebs durch das MES getroffen worden sind, erkannt bzw. extrahiert.

### 2. Analyse der Entscheidungen des MES

Die zuvor extrahierten Entscheidungen des MES werden analysiert und besonders dahingehend bewertet, ob diese Entscheidungen suboptimal waren, d.h. ob es also eigentlich bessere Alternativen gegeben hätte.

### 3. Snapshot-Bildung (Momentaufnahme)

Für die ermittelten nicht optimalen Entscheidungen wird ein Snapshot mit verschiedensten Informationen aus der Anlage erzeugt. Dieser wird semantisch angereichert, so dass in der Momentaufnahme reine Produktionsdaten aus dem MES als auch semantische Informationen zum Zustand der Anlage vorliegen.

### 4. Relevanzlearning

Auf Basis eines Lernverfahrens werden alle für eine bestimmte Situation relevanten Teile des Snapshots und Informationen aus dem MES herausgesucht. Damit liegen nur noch Informationen über Zustände bzw. Anlageneigenschaften vor, die mit der Situation korrelieren.

### 5. Vergleich bzw. Bewertung der Ergebnisse

Es wird geprüft, ob sich die Ergebnisse des Schrittes 4 mit allgemeinen Aussagen (zum Verhalten von Produktionssystemen) und Strukturinformationen in Zusammenhang setzen lassen (z.B. durch Inferenz). Existieren solche Zusammenhänge, so werden diese ausgehend von Informationen aus der Relevanzlearning in Form von Inferenzketten (Erklärungsketten) gefunden. Die Anzahl der gefundenen Inferenzketten bestimmt der Rang der Information.

### 6. Ableitung von natürlichsprachlichen Erklärungen

Die gesamte Menge der gefundenen Inferenzkette liefern die mögliche Erklärung für die Entscheidung des MES und bilden dabei den semantischen Inhalt der zu gerierenden Erklärungstexte. Deswegen wird zuerst die Quintessenz dieser Inhalte durch eine geschickte Graph-Transformation extrahiert und daraus mithilfe von einem vortrainierten neuronalen Netz einen Erklärungstext für eine Zielsprache generiert.

### 7. Ranking der Ergebnisse (optionaler Schritt)

Die Erklärungen werden nach Kriterien sortiert (z.B. Einfachheit der Erklärung, Hitrate, Dislike von Benutzern) und angezeigt oder ggf. weggelassen. Hierbei kann ein Lernverfahren helfen, über Ähnlichkeiten auch neue Situationen zu sortieren.

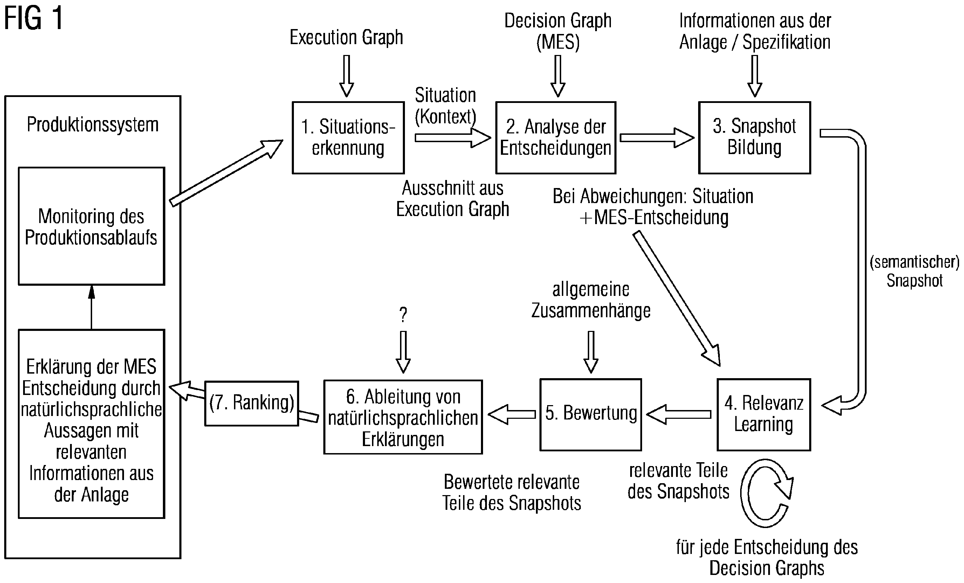

Die Figur 1 zeigt nun in schematischer Darstellung die wesentlichen Verfahrensschritte des Verfahrens. Diese Schritte werden nun nachfolgend detaillierter erklärt:

### zu 1.): Situationserkennung

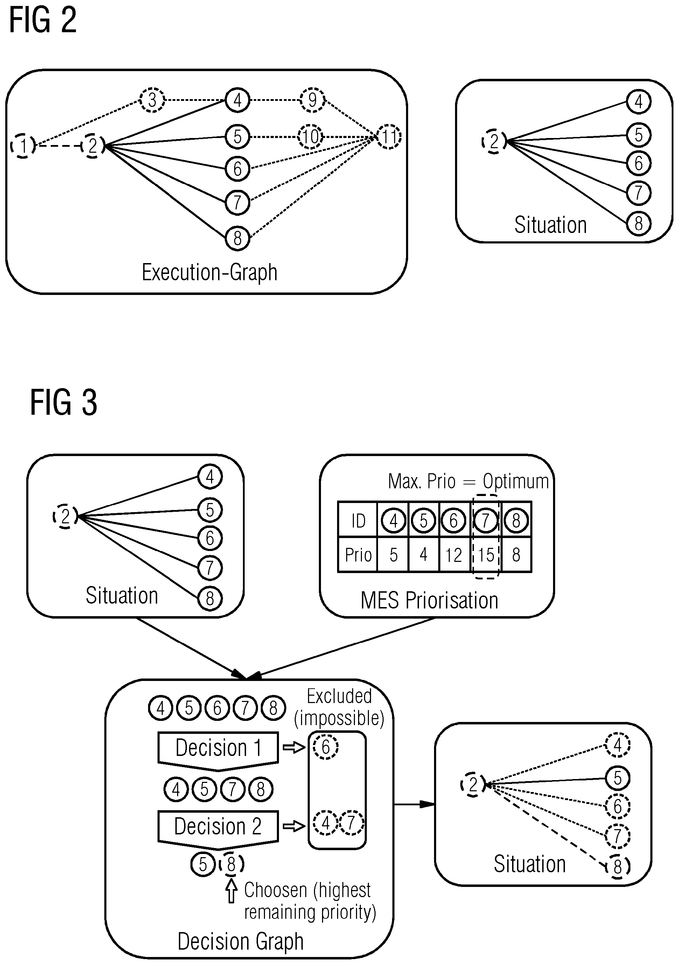

Um die Komplexität des Problems der Erkennung des Anlagenzustands zum Zeitpunkt der Vornahme einer nicht optimalen Entscheidung durch das MES zu reduzieren, soll das System trainiert werden, um für wiederkehrende Situationen und darin enthaltene Entscheidungen Aussagen zu treffen. Der Kontext kann beispielsweise der Ausschnitt aus einem Execution Graphen sein, der die mögliche Abfolge auszuführender Produktionsschritte beschreibt. Dieser Ausschnitt zum Zeitpunkt der fraglichen MES-Entscheidung umfasst bei einem Execution Graph beispielsweise den aktuellen und mindestens alle Knoten des nächsten Schrittes. Eine gleiche Situation liegt vor, wenn der Kontext gleich ist (vgl. Figur 2).

Ein alternatives Ausführungsbeispiel zum Bestimmen der derselben Situation wäre es, die vollständigen Execution Graphen aller in der Fertigung befindlichen Produkte des betrachteten Zeitintervalls und weitere Informationen zur Beschreibung der Situation zu berücksichtigen. Hier könnten zusätzliche Informationen aus der Anlage berücksichtigt werden. Dabei werden nur Informationen bzgl. Ressourcen betrachtet, die für die noch ausführbaren Schritte in Frage kommen. Eine zusätzliche Einschränkung kann dadurch erfolgen, dass nur relevante Informationen betrachtet werden, welche durch Schritt 4 (Relevanz-Learning) des Verfahrens ermittelt werden können.

Ein weiteres alternatives Ausführungsbeispiel ist die Betrachtung der vollständigen Execution Graphen aller Produkte und ggf. weitere Informationen zur Beschreibung der Situation. Anschließend wird über Ähnlichkeitsmetriken (Graph-Embedding) und Schwellwerte eine gleiche bzw. ähnliche Situation bestimmt.

### zu 2.): Decision Graph

Für Schritt 2 ist es erforderlich, dass die Entscheidungslogik des MES formalisiert vorliegt (z.B. als Decision Graph modelliert ist). Für jede Situation im Execution Graph (siehe Schritt 1) wird dabei dieser Decision Graph genutzt, um die Entscheidungen des MES abzubilden. Dabei wird jeder relevante Schritt in der Entscheidungslogik des MES in einen Knoten des Decision Graph abgebildet. Nach jeder Entscheidung des Decision Graphs, also der Entscheidungslogik des MES, können verfügbare Möglichkeiten des Execution Graphs wegfallen. Für jede Situation gibt es eine priorisierte Reihenfolge, in welcher die Möglichkeiten des Execution Graphs für den nächsten Schritt gewählt werden. Abweichungen von dieser priorisierten Reihenfolge sollen in Rahmen dieser Erfindung durch natürlich sprachliche Sätze beschrieben werden.

Durch den Decision Graph werden mehrere Ziele verfolgt: Der Decision Graph bildet die Vorlage, um aus MES-Entscheidungen natürlichsprachliche Sätze zu bilden. Ausserdem soll der Decision Graph genutzt werden um die Relevanzanalyse (siehe Schritt 4) zu trainieren.

Die Figur 3 beschreibt die Wirkungsweise des Decision Graph in einem konkreten Beispiel. Der Ablauf ist dabei wie folgt: Für eine konkrete Situation werden Prioritäten für alle erreichbaren Knoten ermittelt (siehe auch MES Priorisation). Das MES überprüft in den 'Decisions' genannten Schritten, ob jede der Möglichkeiten aus dem Executions Graph noch valide ist. Möglichkeiten, die durch die jeweilige Entscheidung herausfallen, werden identifiziert. Im Beispiel (siehe Decision Graph) führt Decision 1 zum Ausschluss der Möglichkeit 6. Decision 2 führt zum Ausschluss der Möglichkeiten 4 und 7. Jede Decision bildet sich durch einen evtl. komplexen Teil der eigentlichen Bussinesslogik (Execution Logic) ab. Aus den verbliebenen Möglichkeiten wählt das MES die beste Fertigungsalternative (höchste Prio) aus. Relevant für die Feststellung einer Abweichung vom Optimum ist im Beispiel speziell der Ausschluss der Möglichkeiten 6 und 7. Der Ausschluss von Möglichkeit 4 hingegen fällt nicht ins Gewicht.

Für das Trainieren der Relevanzanalyse (siehe Schritt 4) muss zu dem aktuellen Snapshot (siehe Schritt 3) die Information gespeichert werden, welche der Entscheidungen zum Ausschluss welcher Möglichkeiten geführt hat.

zu 3.): Snapshot-Bildung von Anlagen-, MES- und IoT-Daten Für jede eingetretene Situation im Execution Graph werden Informationen über den Zustand des Gesamtsystems erfasst und gespeichert ("snapshot" oder Momentaufnahme). Diese Informationen müssen semantisch beschrieben sein, um daraus die natürlich sprachlichen Erklärungen ableiten zu können (siehe Schritt 6).

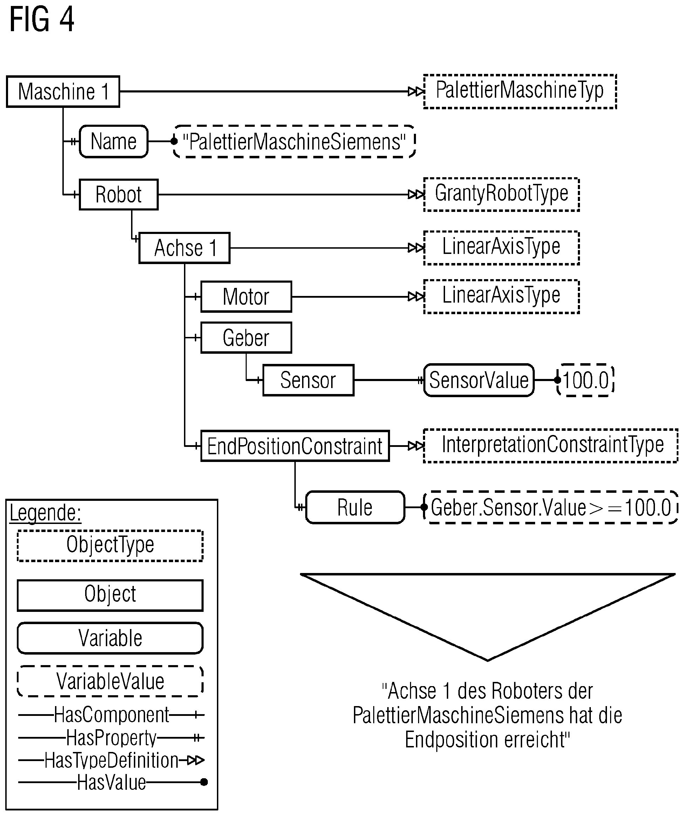

Für ein Ausführunsbeispiel wird aus diesem Grund hier angenommen, dass die Informationen über den Zustand des Gesamtsystems und seine Komponenten extrahiert werden, z.B. von einem System, das für die beiden Aufgaben Kommunikation und Informationsmodellierung eingesetzt werden kann. In unserem Fall ist das Informationsmodel aller Komponenten des Gesamtsystems mit funktionalen und strukturellen Informationen sowie mit Verhaltensmodellen angereichert, so dass z.B. eine Interpretation des Werts einer Variable in der Prozesssteuerung einer einzelnen Resource (PLC) abgeleitet werden kann. Die Figur 4 illustriert, wie aus einem Sensorwert die sprachlich ausformulierte Information "Achse 1 des Roboters der PalettiermaschineSiemens hat die Endposition erreicht" extrahiert werden kann.

Dafür wird ein Informationsmodel mit Interpretationsbedingungen angereichert. Eine Interpretationsbedingung drückt einen Fakt aus und besitzt mindestens eine Bedingung, die mit einer oder mehreren Variablen verknüpft sind. Sobald diese Bedingung erfüllt ist, kann davon ausgegangen werden, dass der ausgedrückte Fakt wahr ist. D.h. aus den aktuellen Werten der Variablen des Gesamtsystems kann eine Liste von wahren Fakten aus diesem Informationsmodel extrahiert werden. In vorliegenden Fall sind die Fakten hier als Triples ("subjekt", "Prädiket", "Objekt") ausgedrückt und können entsprechend weiter analysiert werden, z.B. in einer Ontologie. In der Figur 4 besitzt die Linearachse "Achse 1" einen Gebersensor und eine Interpretationsbedingung "EndpointConstraint", welche die Erreichbarkeit der Endposition der Achse ausdrückt. Diese Interpretationsbedingung lässt sich mit der Regel "Geber.Sensor.Value >= 100" überprüfen, wobei "Geber.Sensor.Value" der Sensorwert des Gebers der Achse ist.

Sobald der Wert des Gebersensors größer als 100 ist, hat die "Achse 1" ihre Endposition erreicht. D.h. sobald die Bedingung "Geber.Sensor.Value >= 100" erfüllt ist, wird das Triple ("Achse 1", "ist an", "Endposition") generiert. Da das Informationsmodel der Anlage zusätzliche Informationen liefern kann, kann das generierte Triple mit ergänzenden Fakten (weiteren Triples) ergänzt werden, um höherwertige Fakten (höherwert im Sinne der Aussagekraft für einen Anwender) zu generieren. In der Figur 4 ist eine Beispiel-Struktur einer Anlage dargestellt. Da die Achse "Achse 1" Komponente des Linearroboters "Robot" ist, können die Triple ("Robot", "hasType", "LinearRobot") und ("Achse 1", "ist Komponente", "Robot") zusätzlich generiert werden.

Die insgesamt drei generierten Triples haben zusammen eine äquivalente Aussagenkraft, wie der Satz "Der Linearroboter "Robot" hat die Endposition erreicht". Genauso können über hierarchische Beziehungen einer Menge von Fakten generiert werden, die die gleiche Aussagekraft haben wie der folgenden Satz: "Achse 1 des Roboters der PalettiermaschineSiemens hat die Endposition erreicht".

Mit diesem Verfahren werden somit in den späteren Schritten aus den aktuellen Werten der Variablen des Gesamtsystems mehrere Mengen von Triples generiert, die den semantischen Snapshot des Gesamtsystems bilden. Hierbei gehen nur die zuvor in Schritt (4) auf Relevanz geprüften Informationen ein, wodurch die Menge der Aussagen nur für die Situation relevante Triples enthält. Die Anzahl der in der Relevanzanalyse herausgearbeiteten Informationen ist typischerweise deutlich geringer als die Gesamtzahl aller möglichen Informationen und somit sind es auch deutlich weniger Triples als auf der Basis aller, auch nicht relevanter Informationen.

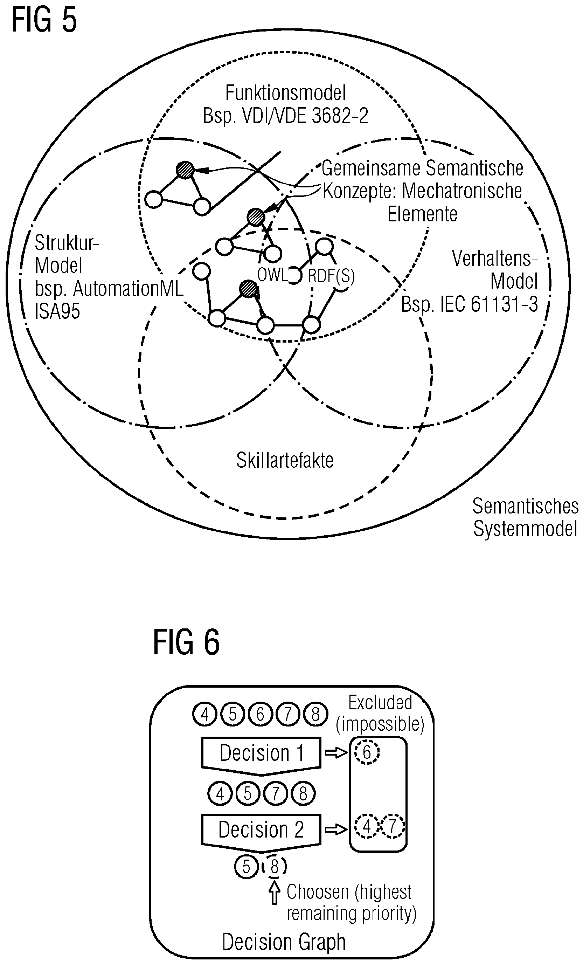

Um einen Daten-Server mit den nötigen Informationen zu generieren, wird zunächst eine Ontologie zur Beschreibung der Komponenten des Gesamtsystems erstellt. Diese Ontologie aggregiert die unterschiedlichen Standards und Informationsmodelle ggf. aus verschiedenen Engineeringstools und Engineering-Domänen. Um das Problem der semantischen Inkompatibilität und Heterogenität zwischen den Engineering-Domänen und auch zwischen die Engineerings Tools zu überwinden, wird hier auf eine "Ontology Alignment"-Methode basierend auf dem Konzept des "minimal common elements" zurückgegriffen. Die Methode sichert das Finden einer gemeinsamen Ontologie zwischen unterschiedlichen Ontologien, sobald ein minimales gemeinsames Konzept zwischen allen Informationsmodellen existiert. Im vorliegenden Fall bilden beispielsweise die unterschiedlichen mechatronischen Komponenten (z.B. Motoren, Sensoren, etc...) die minimalen gemeinsamen Konzepte zwischen den unterschiedlichen Informationsmodellen. Ein Motor wird beispielweise mechanisch im CAD-Model und in dem Strukturmodel repräsentiert, während sein Verhalten durch meistens einen Funktionsbaustein in die Steuerungssoftware gekapselt wird und seine elektrischen Eigenschaften beispielsweise durch ein Spulenmodel in einem Blockschaltbild repräsentiert werden. In diesem Fall wird die resultierende Ontologie durch die Verlinkung der Knoten, die den Motor in den unterschiedlichen Informationsmodellen repräsentiert, gebildet. Figur 5 zeigt eine Gesamtübersicht des hier vorliegenden integrierten Informationsmodels.

Nachdem das semantische Systemmodel des Gesamtsystems in einer gesamten Ontologie abgebildet wurde, wird das Informationsmodel der einzelnen Komponenten und Maschinen extrahiert und generiert. Der Zustand des Gesamtsystems ist beschrieben durch:
a) Anlageninformationen, z.B.:
   - Informationen über Fehlermeldungen
   - Systemzustand der Maschinen
   - Fehlermeldungen
   - PLC-Variablen, In-/Outputs
b) Informationen aus dem MES, z.B.:
   - Verfügbarkeit der Maschinen
   - Graphen inklusive Zustände aller Produkte
   - Informationen über Order Stack (Aufträge)
   - Prioritäten von Aufträgen
   Da höher priorisierte Aufträge niedriger priorisierte Aufträge auf nicht optimale Ausführungspfade verdrängen können, sind die aktuellen Aufträge, die gerade abgearbeitet werden, potentiell relevant. Der Ort, wo die anderen Aufträge gerade abgearbeitet werden ist relevant, da hierdurch die Pfade des aktuell betrachteten Auftrags beeinflusst werden können. Die Anzahl der aktuell anstehenden Aufträge ist möglicherweise relevant, da ab einer gewissen Mindestanzahl (hohe Belegung bzw. zu hohe Belegung) mit starken Beeinflussungen und sogar mit Problemen zu rechnen ist. (Prioritäten, viele hochrangige Prioritäten, konkurrierende Aufträge, Anzahl der Aufträge). Es wird in erster Näherung nur der Ist-Zustand der Anlage abgebildet, also wo sich welcher Auftrag gerade befindet, inkl. Priorität usw. In einer weiteren Ausführungsform werden auch zukünftig mögliche Aktionen für jeden Auftrag mit in den Snapshot aufgenommen.
c) IoT Sensorvariablen
   - Raumtemperatur
   - Luftfeuchtigkeit
   - Rollläden offen/geschlossen
   - Türen offen/geschlossen
   - Schwingung vom Fundament
   - Position von Gabelstaplern etc.

Zur Reduktion der Datenmenge der Snapshots ist es möglich nur die Differenzen von bereits bestehenden Snaphots abzuspeichern. Es wird also ein Snapshot zu einer bestimmten Situation abgespeichert und alle ähnlichen Situationen werden dann nur als Differenz zu diesem Snapshot abgelegt. Eine Situation kann dann als ähnlich angesehen werden, wenn die Situation vor dem Prüfen von Restriktionen weiterer Fertigungsoptionen vor einer Entscheidung aus Sichte des MES gleich ist (siehe 1). Sind zwei Snapshots bezüglich des Inhalts identisch, so kann eine Referenz auf diesen vorhandenen Snapshot anstelle der Daten abgespeichert werden. In dieser Situation kann auch ein Zähler in dem Snapshot, der die Häufigkeit des Auftretens des Snapshots mitzählt, erhöht werden (Refcounting).

zu 4.): Feature Extraction zur Relevanzanalyse Aufgabe einer RL-Instanz (RL Agent) ist es, den Snapshot zu filtern, indem z.B. unrelevante Informationen aus dem Snapshot gestrichen werden. Dieser "gefilterte" Snapshot geht als Input in einen Classifier. Dieser Vorgang wird solange wiederholt, bis die Genauigkeit des Classifiers zufrieden stellend ist (z.B. durch Nutzervorgabe oder einen Default-Wert von 90%). Bei der erreichten Genauigkeit sind die für diese Entscheidung relevanten Informationen im Snapshot enthalten und die Informationen, die keinen Einfluss auf die Entscheidung gehabt haben, wurden gestrichen.

Input in den Classifier (z.B. Neuronales Netz): gefilterter Snapshot
Output aus dem Classifier (z.B. Neuronales Netz): Prädiktion der übrigen Aktionen
Verwendung der Labels (übrig gebliebene Aktionen), um die Genauigkeit des Classifiers zu validieren
Output der Relevanzanalyse: Relevante Informationen des Snapshots

Der Snapshot beinhaltet Informationen aus dem MES und aus der Anlage. Alle Informationen aus dem MES sind für die Entscheidungslogik des MES relevant. Dazu kommen aber noch die detaillierten Informationen aus der Anlage, welche die Informationen aus dem MES erklärbar machen bzw. mit weiterem Inhalt versehen. Die Informationen aus der Anlage können sehr umfangreich sein. Demgegenüber ist typischerweise für eine Entscheidung des MES in einer gegebenen Situation nur ein kleiner Bruchteil dieser Anlageninformationen relevant. Ein Zwischenziel dieser Erfindung auf dem Weg zur Bereitstellung der Erklärungen zu diesen Entscheidung ist u.a. diese Informationen herauszufinden.

Die Relevanzanalyse wird für jede Decision der Entscheidungslogik des MES ausgeführt. Somit werden für jede Decision weitere Informationen gefunden, die in diesem Schritt zu den relevanten Informationen aus dem MES gemappt werden. Dieser Schritt ist besonders wichtig für die Sprachbildung. Die Informationen aus dem MES werden durch einen Nebensatz (z.B. " ..., weil ") begründet. Wenn z.B. nach einer Decision Aktionen wegfallen, kann durch dieses Verfahren begründet werden, warum sich die Entscheidungslogik des MES gegen bzw. für bestimmte Aktionen entschieden hat, indem angegeben wird, welche Anlagendaten mit dieser Entscheidung zusammenhängen bzw. korrelieren.

Beispielsweise können folgende Informationen aus dem MES kommen: «Aktion 1 und 2 können nicht ausgeführt werden». die vorliegende Erfindung ist nach Durchlauf des gesamten Verfahrens nun in der Lage, weitere Zusatzinformationen zu diesen MES-Entscheidung anzugeben, wie z.B.: «Aktion 1 kann nicht ausgeführt werden, weil das Transportband zu Maschine A ausgefallen ist. Aktion 2 kann nicht ausgeführt werden, weil Maschine B eine Störung hat, weil der OPC UA Server der S7-1500 PLC_NNA16Y nicht mehr erreichbar ist». Somit weisst der Nutzer hierdurch, dass er den OPC UA der S7-1500 PLC_NNA16Y prüfen muss, damit Maschine B in Zukunft gewählt werden kann.

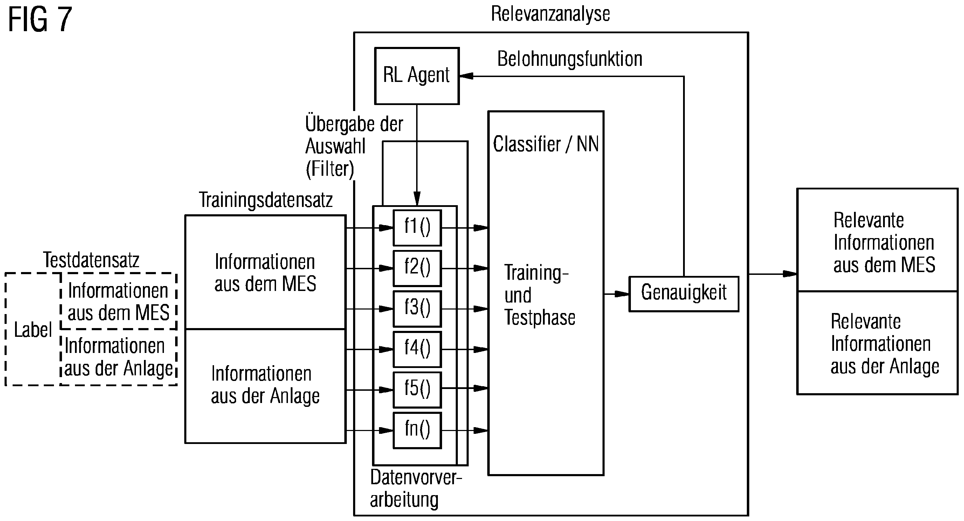

Die Figur 7 stellt die Relevanzanalyse schematisch dar. Die angedeuteten Funktionen der Datenvorverarbeitung sind im Falle dieses Ausführungsbeispiels Filterfunktionen, welche die Informationen aus dem Snapshot streichen oder durchlassen. Der Trainingsdatensatz besteht aus vielen Snapshots unterschiedlicher Situationen, aber immer nur für den gleichen Knoten des Entscheidungsgraphen. Der Testdatensatz beinhaltet Snapshots aus verschiedenen Situationen und zusätzlich die "realen" Labels. Der Classifier wird in einer Trainingsphase mit dem Trainingsdatensatz trainiert und in einer Testphase mit dem Testdatensatz validiert. Der Classifier sagt die übrig geblieben Aktionen für die betrachtete Decision der MES Entscheidungslogik voraus. Diese Ausgabe wird mit den realen Labels des Testdatensatzes verglichen und somit eine Genauigkeit berechnet, welche als Bewertungsfunktion des RL Agenten dient, der die Filter ausgewählt hat. Das Verfahren wird solange iterativ angewendet, bis die Genauigkeit des Classifiers zufriedenstellend ist. Für jede Decision der Entscheidungslogik des MES wird ein eigener Classifier trainiert, da jede Decision andere Informationen als relevant betrachtet und somit das Training effizienter wird.

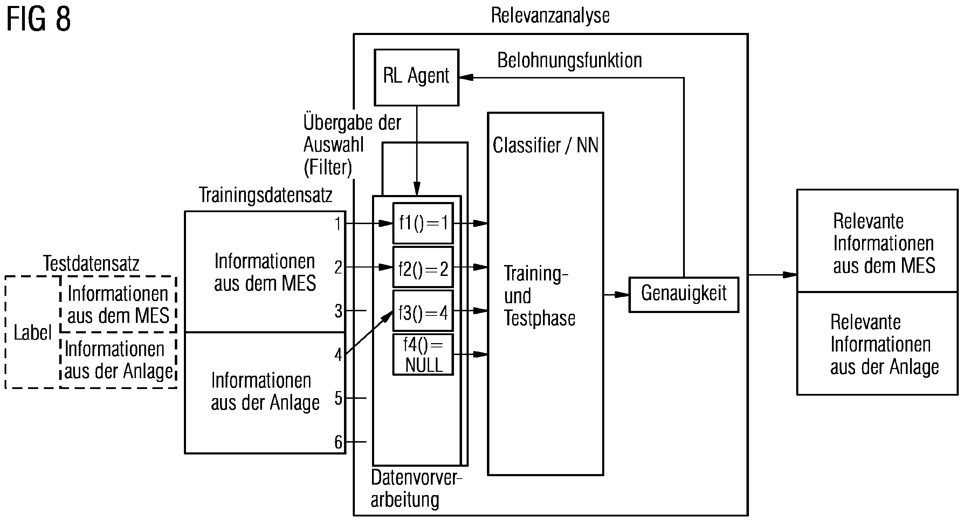

Bei sehr großem Informationsinputvektor aus der Anlage könnten folgende Techniken zur Reduktion des auf einmal eingesetzten Vektors eingesetzt werden (siehe auch Figur 8): Anstelle eines relevant/irrelevant Filters kann ein Auswahloperator pro Input eingesetzt werden, der den Input (bzw. die Zeile) aus dem ggf. sehr großen Informationsvektor auswählt. Die Anzahl der Inputs in der Datenvorverarbeitung ist also deutlich kleiner als die vorhandenen Inputs bzw. Inputvariablen aus dem Snapshot. Hierbei gibt es auch den Null-Operator, der auf einen leeren Input zeigt für das Deaktivieren dieses jeweilige Filters, um die Anzahl der relevanten Inputs noch weiter reduzieren zu können. Die Maximalanzahl der Filter in der Vorverarbeitung ist dabei fix vorgegeben. Die Filter können zufällig initialisiert werden oder besser auf der Basis ähnlicher Entscheidungen. Der RL Agent variiert bei der Exploration als Aktionen die Adressierung der Filterfunktionen.

Aktion des RL Agenten ist nicht mehr Filter auf 0 oder 1 setzen, sondern für jeden Filter einen aus dem Input Vektor auszuwählen, oder auf 0 setzen wie zuvor. Anstelle des Duchlassoperators tritt die Auswahl, welche Variable aus dem Snapshot für den Input gewählt wird. Hierbei kann jede Variable nur 1 mal in der Datenvorverarbeitung ausgewählt werden. Die Reihenfolge der Auswahl im Datenvorverarbeitungsvektors spielt keine Rolle. Eine Sortierung der relevanten Variablen kann für das Speichern Vorteilhaft sein. Mit 0 besetzte Filter sind nicht relevant und brauchen nicht abgespeichert werden.

zu 5.):Postprocessing zur Erzielung relevanter Erklärungen In einem nächsten Schritt können die Ergebnisse der Relevanzanalyse bewertet werden, indem überprüft wird, ob sich die Korrelationen in Beziehung zu allgemein bekannten kausalen Zusammenhängen setzen lassen. Dazu ist es notwendig, dass allgemeine Zusammenhänge, wie z.B. das Nichtfunktionieren von druckluftbetriebenen Aktuatoren bei Unterschreiten des Betriebsdrucks eine pneumatische Anlage einmal modelliert werden (z.B. in einem Knowledge Graph). Dabei sind zwei Randbedingungen wichtig:
Zum einen sind diese Zusammenhänge allgemeiner Natur, d.h. nicht spezifisch für eine bestimmte Anlage. Die Modellierungen können deshalb wiederverwendet werden. Zum anderen ist es nicht notwendig, dass diese Modellierungen erschöpfend sind. Mit zunehmender Anzahl der Zusammenhänge steigt aber natürlich die Wahrscheinlichkeit, dass sie für ein konkretes Problem zutreffend sind. Es ist denkbar domainspezifische Modellierungen zu nutzen.

Zusammen mit den in Schritt 3 beschriebenen Strukturinformationen bzw. Anlagenkonfiguration und den Ergebnissen der Relevanzanalyse werden diese Informationen in einen Knowledge Graph aggregiert. Dann wird der resultierende Knowledge Graph mithilfe eines Reasonner vervollständigt, indem Inferenzverfahren angewendet werden, um zusätzliche Beziehung zwischen den Konzepten des resultieren Knowledge Graphs zu generieren. Danach wird aus dem vollständigen Knowledge Graph versucht, ausgehend von den Ergebnissen aus dem Relevancelearning, alle möglichen Zusammenhänge in Form von Inferenzkette (Erklärungskette) durch spezielle Queries zu finden. Diese Abfragen können gezielt für ein bestimmtes System oder eine Domaine angepasst werden, um unerwartete Zusammenhänge zu vermeiden. Die gefundenen Inferenzketten ergeben eine mögliche Erklärung zu der Entscheidung des MES in Bezug auf eine Domain oder ein System. An diese Stelle können mehreren Erklärungsketten gefunden werden. Dabei kann gelten: Je mehr Einzelinformationen sich in Relation setzen lassen, umso höher ist die Wahrscheinlichkeit, dass sie in ursächlichem Zusammenhang mit der aktuell zu erklärenden Entscheidung stehen. Deswegen werden die Ergebnisse des Relevance-learning anhand der Anzahl der gefundenen Inferenzketten aussortiert. Gibt es z.B. Informationen über einen zu niedrigen Druck in der Pneumatik und gleichzeitig Ausfälle oder Probleme an pneumatisch betriebenen Aktoren, können diese Ergebnisse höher gerankt werden, als singuläre Fehlermeldungen.

Eine weitere Einschränkung kann zum Beispiel auch dabei erreicht werden, dass die relevanten Informationen vorab nach Informations-Typen geclustert werden. Beispiele hierfür sind diskrete Daten (wie z.B. Produktpositionen), Variablen und Netzwerkfehler, Time-outs. Die diskreten Daten, welche Produktpositionen beschreiben, können von der Suche nach Zusammenhängen im Knowledge Graph ausgenommen werden.

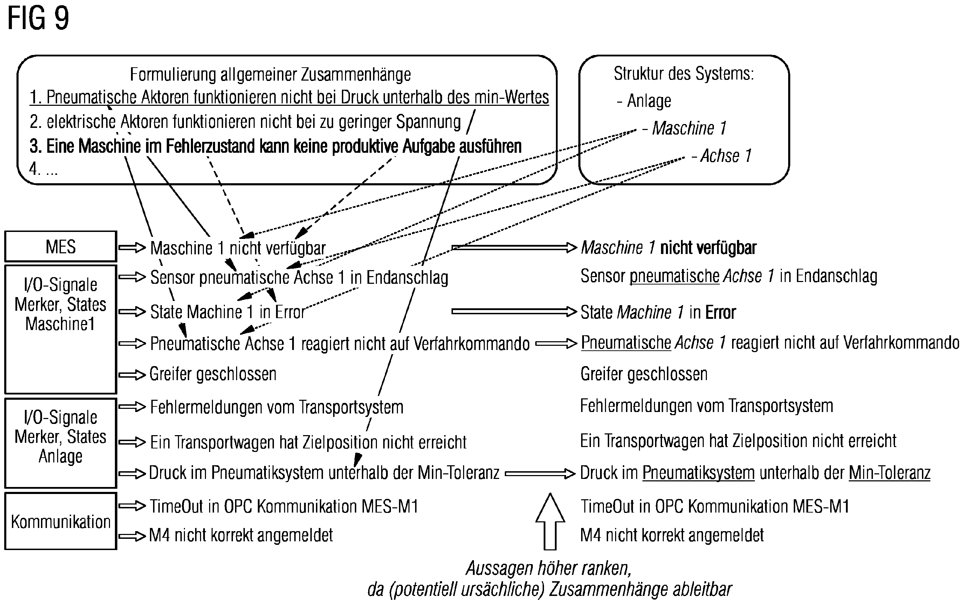

Die Figur 9 soll an einem Beispiel darstellen, wie eine solche Bewertung der Informationen bzw. Aussagen aus dem Relevanzlearing unter Einbeziehung allgemeiner Zusammenhänge und Strukturinformationen der Anlage mit dem Ziel einer Ableitung von natürlich sprachlichen Erklärungen für die Entscheidungen erfolgen kann:
Nach der Auswahl bzw. Bewertung der für die Entscheidung des MES relevanten Informationen, soll hier ein natürlich sprachlicher Erklärungstext generiert werden. Die Ausgabe des vorherigen Schritts erfolgt durch eine Liste von gewichteten Informationen in Form von Inferenzketten. Eine Inferenzkette ist hier eine Kette von Triples (Fakten), welche die Entscheidung des MES erklären. Z.B. "GeberSensorwert ist größer als 100.0" => "Achse des Roboters ist in Anschlag" => "Roboter kann nicht bewegt werden" => "PalettierMaschineSiemens ist in Fehlerzustand" => "MES wählt die PalettierMaschineSiemens nicht". Im Allgemein ist die Inferenzkette in dieser Form ausgedruckt: (Subjekt, Prädikat, Objekt) => (Subjekt, Prädikat, Objekt) => ... => (Subjekt, Prädikat, Objekt), wobei das erste Triple der Inferenzkette ein oder mehrere Triples aus der Relevanzanalyse (siehe Feature Extraction zur Relevanzanalyse) ausdrückt und wobei das letzte Triple einen Fakt, beispielsweise eine explizite die Entscheidung des MES, ausdrückt. Eine Inferenzkette liefert eine mögliche Erklärungskette, wie z.B. eine Änderung einer Variablen zu einer Entscheidung des MES führen kann.

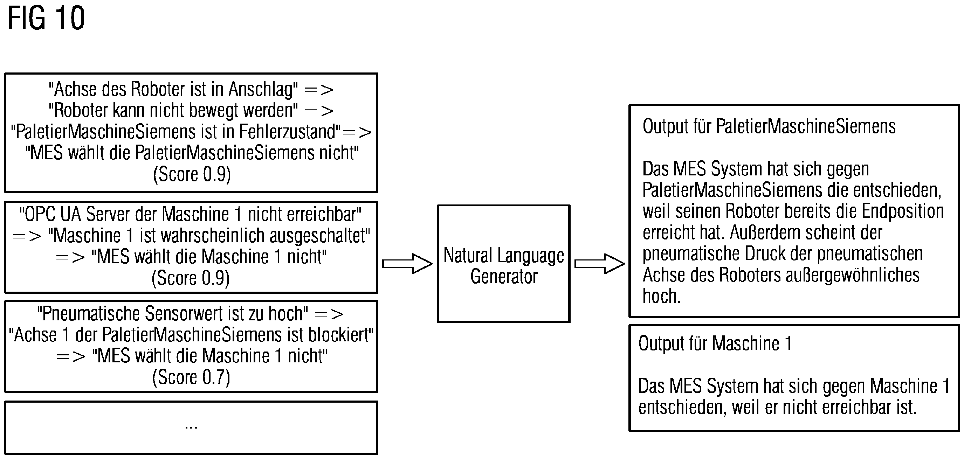

Die Existenz mehrere Inferenzketten illustriert die Tatsache, dass es mehrere Gründe geben kann, warum das MES sich für eine Maschine nicht entschieden hat. Deswegen werden alle Inferenzketten mit einem Score allokiert. Der Score beschreibt, wie relevant die Inferenzkette zur Erklärung der Entscheidung des MES System ist. Nun soll aus diesen Inferenzketten eine für der Maschinenbetreiber verständliche Erklärung generiert werden, warum das MES System sich beispielweise nicht für eine Maschine bzw. für eine bestimmte Aktion, die eigentlich besser gewesen wäre, entschieden hat. Die Figur 10 illustriert diese Aufgabe.

Um diese Aufgabe zu lösen, können unterschiedliche Verfahren der Natural Language Generation (NLG) eingesetzt werden. NLG ist hier definiert durch das Teilgebiet der künstlichen Intelligenz und der Computerlinguistik, das sich mit dem Bau von Computersystemen, die verständliche Texte in menschlichen Sprachen aus einer zugrundeliegenden nicht-linguistischen Darstellung von Informationen erzeugen können, beschäftigt. Die vorhandenen Methoden reichen von vorgefertigten Templates mit festen Ausdrücken über generische künstliche intelligente Verfahren bis hin zu Deep-Learning Modellen.

Das vorliegende Ausführungsbeispiel hier nutzt ein hybrides Model, das sowohl generische Templates anwendet als auch Sequence-to-Sequence Modelle zur robusten Verallgemeinerung. Allgemein werden die Ausdrücke in drei Schritten generiert:
- Bildung eines Abstract Meaning Representation (AMR) aus den gewichteten Fakten
   AMR Graphen sind ein semantischer Formalismus, in dem die Bedeutung eines Satzes als verwurzelter, gerichteter azyklischer Graph kodiert wird. Knoten repräsentieren Konzepte, und beschriftete gerichtete Kanten repräsentieren die Beziehungen zwischen ihnen. Die AMR-Darstellung abstrahiert die Bedeutung eines Satzes von seiner syntaktischen Struktur und erzeugt eine sprachneutrale Darstellung. AMRs sind flexibel und nicht speziell für eine bestimmte Domäne konzipiert. AMRs werden sehr oft als Zwischenrepräsentation für verschiedene NLP-Anwendungen eingesetzt. Es ist daher konzeptionell attraktiv, AMRs zu nutzen, um die Erklärung, die die Inferenzketten liefern, sprachneutral zu kodieren. Die Veröffentlichung [1] liefert eine gute Beschreibung von AMR Graphen.
   Im ersten Schritt werden hierbei die Inferenzketten pro relevanter Maschine sortiert und zu einem semantischen Graphen aggregiert. Die Aggregation erfolgt durch iterative Nachbildung der Inferenzketten in AMR. Ziel der Aufgabe ist es, alle für die Formulierung des Textes relevante Informationen zusammen zu sammeln.
- Extraktion eines resultierten Summengraphen des AMR GraphsNach dem vorherigen Schritt entsteht ein erweiterter komplexer Graph mit Redundanzen und nicht nötigen Informationen. Dabei wird davon ausgegangen, dass ein zusammenfassender Graph, der die wesentlichen Informationen enthält, aus dem Quellgraphen über heuristische Verfahren identifiziert werden kann. Um diesen Graphen zu extrahieren, werden zuerst alle Knoten und Kanten des Quellgraphen mit einer Reihe von Merkmalen, die ihre Wichtigkeit innerhalb des Quellgraphen charakterisieren, erweitert. Merkmale wie Häufigkeit, Positionen, Konnektivität, Anzahl der Kinder, Page-rank Score bzw. der Linkpopularität werden berechnet. Diese Merkmale kodieren die Struktur des Graphen und dabei die Bedeutung der Erklärungen. Danach wird ein evolutionärer Algorithmus angewendet, der iterativ den Quellgraphen reduziert, so dass ein äquivalenter Graph (mit wenigen Knoten und Kanten) entsteht. Dabei wird eine Verlustfunktion, der die Differenz zwischen dem Quellgraphen und dem Summengraphen definiert, optimiert. Als Ergebnis dieser Aufgabe liegt ein reduzierter AMR-Graph, mit dem gleichen (oder ähnliches) Inhalt wie der Quellgraph bzw. die Quellgraphen.
- AMR-to-text Generierung
   Die Aufgabe der AMR-zu-Text-Generierung besteht darin, grammatikalischen Text zu erzeugen, der die gleiche semantische Bedeutung wie ein gegebener AMR-Graph hat. Diese Aufgabe ist wichtig, aber auch herausfordernd, da jeder AMR-Graph in der Regel mehrere korrespondierende Sätze hat. Die Literatur liefert einige Lösungen zur AMR-zu-Text-Generierung. Im vorliegenden Ausführungsbeispiel wird der natürlich sprachlichen Erklärungstext direkt aus einem Eingangs-AMR durch die Behandlung der AMR-zu-Text-Generierung als eine Variante von das Traveling Salesman Problem (TSP) in Anlehnung an [2] generiert. Die angewendete Methode ist sehr robust und kann für unterschiedliche Sprachen angewendet werden. Nach der Generierung des Erklärungstextes wird diese ausgegeben, falls die Entscheidung des MES System von einer vorhergesehenen Strategie (z.B. definiert durch die Priorisierung der Maschinen) abweicht, z.B. wenn sich das MES gegen eine hochpriore Maschine entscheidet.

### Referenz:

[1] Laura Banarescu, Claire Bonial, Shu Cai, Madalina Georgescu, Kira Griffitt, Ulf Hermjakob, Kevin Knight, Philipp Koehn, Martha Palmer, and Nathan Schneider. 2013. Abstract meaning representation for sembanking. Linguistic Annotation Workshop.
[2] Linfeng Song, Yue Zhang, Xiaochang Peng, Zhiguo Wang: "AMR-to-text generation as a Traveling Salesman Problem", 2016; [http://arxiv.org/abs/1609.07451 arXiv:1609.07451].

zu 8.): Ranking der 'Weils' z.B. durch den User Die die Begründung für eine Entscheidung beinhaltenden Teilsätze können in einer Ausprägungsform gewichtet (geranked) werden, indem der Nutzer für nicht-passende Begründungen eine negative Bewertung abgibt, wie z.B. über einen "dislike" bzw. "-1" button. Diese Bewertung wird im Graphen, in dem Begründungen modelliert werden, bei der betreffenden Begründung mit Referenz zu der jeweiligen Situation abgespeichert.

Jedes Mal, wenn dann diese Begründung hergenommen wird, um den Ausschluss von Möglichkeiten für eine Situation zu beschreiben, werden für diese Situation die bereits getroffenen Bewertungen herangezogen, um die Aussagen zunächst weit hinten in der Begründungsliste anzusiedeln. Bei einer sehr negativen Gewichtung (Threshold kann vorgegeben werden, z.B. -10), wird die Begründung für die Situation gar nicht mehr herangezogen.

Zu Beginn wird die Gewichtung üblicherweise mit 0 initialisiert. Auch eine zufällige Initialisierung, die nicht zum Ausschluss der Anzeige der Begründungen führt, ist möglich.

Bei der Ausführungsform mit der Verwendung von Embeddings kann hier mit Ähnlichkeit gearbeitet werden. D.h. die Gewichtung wird im Embedding Space bei der betreffenden Situation abgelegt und gilt damit über die Abstandsmetrik analog für alle ähnlichen Situationen im Embedding Space, in dem auch diese Situationen abgelegt sind. Es ergibt sich dann typischerweise eine Häufung von ähnlichen Gewichtungen in der Nähe ähnlicher Situationen, wodurch für neue Situationen bereits eine Gewichtung angenommen werden kann.

In einer weiteren Ausprägungsform werden diejenigen Begründungen höher gewichtet, in denen kürzere Pfade im Knowledge Graph zu einer Begründung führen und insbesondere auch solche, bei denen Daten aus dem Snapshot mehrere Begründungen liefern.

### Beispiel:

- ein Ausfall der Kommunikation begründet, dass mehrere Variablen nicht gelesen werden können und mehrere Variablen nicht geschrieben werden können, sowie dass das mechatronische sowie elektrische Modell nicht angewendet werden können usw.

Um das Ergebnis des Verfahrens zu illustrieren, soll anhand eines Beispiels dargestellt werden, welche Informationen eine wandlungsfähige Produktionsanlage mit und ohne das erfindungsgemässe Verfahren in bestimmten Situationen bereitstellt:
Beispiel 1: In der Anlage sinkt der Druck im Pneumatiksystem unter einen bestimmten Grenzwert, was dazu führt, dass eine Achse in einer Maschine 1 nicht korrekt bewegt werden kann. Diese geht daraufhin in einen Störzustand. Diese Maschine wäre jedoch für einen anstehende Prozessschritt einer Order aufgrund einer kürzlich vorgenommenen Umkonfiguration die beste Wahl gewesen. Die jetzt gewählte Maschine 2 ist ungünstig zu erreichen.

Informationen ohne das erfindungsgemässe Verfahren: Für den Betrachter ergibt sich zunächst eine anscheinend suboptimale Auswahl der Maschine. Durch Analyse der MES-Entscheidungen (oder Logfiles) kann er ggf. die Nichtverfügbarkeit der Maschine 1 erkennen, hat jedoch keine Informationen zur Ursache und Dauer der Nichtverfügbarkeit. An der Anlage kann an der Maschine 1 die Information bzgl. der lokalen Fehlersituation (Achse funktioniert nicht) bekommen werden, die eigentliche Ursache der mangelnde Druck muss aber sehr wahrscheinlich noch an einer dritten Stelle erfasst werden. Damit muss der Anwender nicht nur an verschiedenen Stellen aus unterschiedlichen Systemen die richtigen Informationen zusammentragen, er muss auch darüber hinaus die richtigen Schlussfolgerungen ziehen. Eine schnelle korrekte Einschätzung der Situation ist damit nicht möglich. In der Praxis wird dies oft durch Erfahrungen des Bedienpersonals zumindest z.T. ausgeglichen. Für dynamisch umkonfigurierbare Systeme mit dynamischer Allokation von Ressourcen ist diese jedoch nur eingeschränkt möglich.

Informationen mit dem erfindungsgemäss Verfahren:
Mit dem Verfahren könnte in dieser Situation z.B. die folgende Aussage erzeugt werden:
Hinweis: Die nachfolgende Erklärung bezieht sich zum besseren Verständnis nur auf eine Entscheidung in der Entscheidungslogik des MES für den Wegfall einer Maschine.

Eine solche Ausgabe wird vom Verfahren sogar für jeden Wegfall von besseren Möglichkeiten erzeugt.

"Für den Fertigungsschritt A konnte wurde bei der ersten Entscheidung der Entscheidungslogik (Dispatching) des MES nicht die günstigste Maschine 1 gewählt werden, da diese nicht verfügbar war. In der Anlage gab es zu diesem Zeitpunkt die folgenden Abweichungen von Normalzustand:
Maschine 1 ist in einem Fehlerzustand;
Der Druck im Pneumatiksystem ist unter den Minimalwert gefallen;
Achse 1 reagiert nicht auf Verfahrkommando;
Achse 1 ist im Endanschlag.

Diese Probleme sind wahrscheinlich ursächlich für die suboptimale Entscheidung. Darüber hinaus gab es noch folgende Probleme bzw. Auffälligkeiten:
Es gab einen Timeout in der Kommunikation zwischen einem Anlagen OC-Server und dem MES.
Es gab Fehlermeldungen vom Transportsystem (Weichen reagieren nicht oder verzögert).
Ein Transportwagen hat seine Zielposition nicht erreicht (erwartete ID nicht gelesen)."

Weitere Beispiele, in denen eine Anwendung des erfindungsgemässen Verfahrens vorteilhaft ist, wären:
Eine Situation, in denen durch eine vermeintliche Materialknappheit in einer Maschine ein Auftrag dort nicht ausgeführt werden kann, obwohl lokal noch Material verfügbar ist (sichtbar für den Operator). Wenn das Problem dadurch entsteht, dass aufgrund von Kommunikationsproblemen zwischen Maschine und MES der aktuelle Materialstand im MES nicht aktualisiert wurde, könnte mit Hilfe des hier beschriebenen Verfahrens eine Aussage zu der Situation generiert werden, die den Zusammenhang auflöst, so dass der Anwender die Ursache erkennen kann.

Wenn High-Prio Aufträge durch Verdrängungseffekte bewirken, dass für niederpriore Aufträge nur suboptimale Entscheidungen getroffen werden, können dazu ebenfalls Aussagen erzeugt werden, die ein Erkennen der Ursache für die Situation ermöglichen.

## Patentansprüche

1. Verfahren zur steuerungsrelevanten Aufbereitung von Entscheidungen eines Fertigungssteuerungssystem einer dynamischen Produktionsanlage, umfassend die Schritte:
a) Erkennen und Extrahieren von einer Situation der Produktionsanlage, in der eine steuerungsrelevante Entscheidung automatisiert durch das Fertigungssteuerungssystem vorgenommen worden ist;
b) Analysieren und Bewerten dieser Entscheidung im Bezug auf vorgebbare Produktionskriterien mit dem Ziel eine gegebenenfalls suboptimale Entscheidung zu identifizieren;
c) Aufbereiten einer Momentaufnahme des Anlagenzustands der Fertigungsanlage, die für die suboptimale Entscheidung repräsentativ ist, sowie semantisches Anreichern dieser Momentaufnahme durch semantische Informationen zu diesem Anlagezustand, die vorzugsweise direkt auf dem Fertigungssteuerungssystem stammen;
d) Filtern der semantischen Informationen nach erlernbaren Kriterien zur Eliminierung von Informationsbestandteilen, die nicht hinreichend relevant mit einer Beschreibung der vorgefundenen Situation korrelieren, zur Bereitstellung einer gefilterten Zustandsdarstellung;
e) Überprüfen, inwieweit sich die gefilterte Zustandsdarstellung mit vorbestimmten Aussagen zum Verhalten von Ressourcen der Produktionsanlage und/oder zu Strukturinformationen zu den Ressourcen in Zusammenhang setzen lässt, wobei diese Zusammenhänge in Form von vordefinierten Inferenzketten gefunden werden; und
f) Ableiten von semantischen Inhalten aus den aufgefundenen Inferenzketten und Generierung der steuerungsrelevanten Aufbereitung in Form eines in eine Zielsprache transformierten Erklärungstextes, der mittels eines vortrainierten neuronalen Netzes aus der Quintessenz aus den von den Inferenzketten abgeleiteten semantischen Inhalten gewonnen wird.

2. Verfahren nach Anspruch 1,
**dadurch gekennzeichnet, dass**
der Erklärungstext nach vorgebbaren Kriterien sortiert wird.

3. Verfahren nach einem der Ansprüche 1 bis 2,
**dadurch gekennzeichnet, dass**
ein Lernverfahren eingesetzt wird, um über Ähnlichkeiten auch Erklärungstexte zu einer neuen Situation sortieren zu können.
